# EUROPÄISCHE PATENTANMELDUNG

(11) **EP 1 028 305 A2**
(43) Veröffentlichungstag der Anmeldung: **16.08.2000**
(21) Anmeldenummer: 00100171.8
(22) Anmeldetag: 11.01.2000
(51) Int. Cl.: G01B 11/10

(54) **Verfahren und Vorrichtung zur Bestimmung wenigstens eines Parameters eines fadenförmigen Körpers**

(30) Priorität: 12.02.1999 DE 19905778
(71) Anmelder: W. SCHLAFHORST AG & CO., D-41061 Mönchengladbach (DE)
(72) Erfinder: Birlem, Olav, 41366 Schwalmtal (DE); Henze, Herbert, 41063 Mönchengladbach (DE)

(57) **Zusammenfassung**

Die Erfindung betrifft ein Verfahren zur Bestimmung wenigstens eines Parameters eines fadenförmigen Körpers, wie Durchmesser, Querschnitt oder Oberflächenbeschaffenheit, mittels einer optischen Meßvorrichtung, wobei der fadenförmige Körper mindestens einen Meßbereich einer Sensoreinrichtung (23, 31) durchläuft und an der Sensoreinrichtung (23, 31) ein Einmeßvorgang mittels eines Kalibers (21, 25) durchgeführt wird, die Meßwerte gespeichert und mit am laufenden Faden (9, 34) detektierten Meßwerten verglichen werden. Dazu wird das Kaliber (21, 25) von einer mechanischen Einspannvorrichtung aufgenommen und für den Einmeßvorgang in die Fadenlaufposition (24) im Meßbereich der Sensoreinrichtung (23, 31) gebracht.

Das Verfahren und die Vorrichtung wird für Meßvorrichtungen an Spinn- oder Spulmaschinen eingesetzt.

## Beschreibung

Die Erfindung betrifft ein Verfahren zur Bestimmung wenigstens eines Parameters eines fadenförmigen Körpers gemäß dem Oberbegriff des Anspruches 1 sowie eine Vorrichtung gemäß dem Oberbegriff des Anspruches 5.

Aus der AU-B-29584/84 ist es bekannt, bei der Messung der Garndrehung mit einer Sensoranordnung einen festeingespannten Garnabschnitt als Vergleichskörper während der laufenden Messung zu benutzen. Der als Vergleichskörper dienende Garnabschnitt ist im Meßbereich einer zweiten Meßeinrichtung angeordnet, die in gleicher Weise wie die Meßeinrichtung für das laufende Garn aufgebaut ist. Mit der bekannten Vorrichtung werden relative Durchmesserabweichungen und nicht absolute Durchmesserwerte gemessen. Die Parameter des eingespannten Garnabschnittes verändern sich abhängig von Umgebungsbedingungen wie Temperatur und Feuchtigkeit und sind daher nur bedingt oder nicht brauchbar beziehungsweise reproduzierbar.

Mit der in der CH 643 060 A5 beschriebenen Meßanordnung lassen sich Absolutwerte von Garndurchmessern, jedoch nur unter bestimmten Voraussetzungen, ermitteln. Eine Voraussetzung für eine derartige Messung ist insbesonders die Verwendung eines CCD-Zeilensensors. Das Meßergebnis kann dabei durch Randbereicheinflüsse wie Teilüberdeckung von Sensorelementen, verfälscht werden. Mit der in der CH 643 060 A5 beschriebenen Meßvorrichtung lassen sich zudem nur wenige unterschiedliche Parameter messen. Eine Meßvorrichtung, zum Beispiel bestehend aus Lichtquelle und einfachem Photosensor in der Meßanordnung der CH 643 060 A5, liefert keine Absolutwerte von Garndurchmessern.

Der Erfindung liegt die Aufgabe zugrunde, die Ermittlung von Garnparametern zu verbessern.

Diese Aufgabe wird erfindungsgemäß durch ein Verfahren mit den Merkmalen des Anspruches 1 und eine Vorrichtung mit den Merkmalen des Anspruches 5 gelöst.

Vorteilhafte Ausgestaltungen der Erfindung sind Gegenstand der Unteransprüche.

Die Durchführung eines Einmeßvorganges mittels eines gegen Umgebungseinflüsse unempfindlichen Kalibers mit bekannten Absolutwerten von Parametern, die Speicherung der Meßwerte und der Vergleich mit den am laufenden Faden detektierten Meßwerten ergeben jederzeit reproduzierbare absolute Meßwerte, die unabhängig von der Art der jeweiligen Meßvorrichtung ermittelt werden können. Die Einsatzmöglichkeiten sind gegenüber dem Stand der Technik erweitert.

Der Einsatz des Kalibers ist durch die Aufnahme in einer mechanischen Einspannvorrichtung auf einfache Weise möglich. Die Durchführung des Einmeßvorganges mit einem Kaliber in der Fadenlaufposition im Meßbereich der Sensoreinrichtung liefert eine gute Vergleichbarkeit der Werte des Einmeßvorganges mit den am laufenden Faden detektierten Meßwerten.

Ein als Sensoreinrichtung dienender Meßkopf stellt eine kompakte raumsparende und leicht austauschbare Einheit dar.

Die Vorgehensweise, das beim Einmeßvorgang jeweils eingesetzte Kaliber vom einer Bedienungseinrichtung, die die Spinnstelle angefahren hat, in den Meßbereich der Sensoreinrichtung bringen zu lassen und den Einmeßvorgang während der Anwesenheit der Bedienungseinrichtung an der Spinnstelle durchzuführen, wobei die Bedienungseinrichtung zum Beispiel als Anspinnwagen ausgebildet sein kann, nutzt vorteilhaft den Zeitraum aus, in dem die Spinnstelle nicht beziehungsweise noch nicht produziert, und kann ohne zusätzlichen Aufwand beispielsweise für gesonderte Anspinnwagenfahrten erfolgen, da der Anspinnwagen die Spinnstelle nach einer Spinnunterbrechung ohnehin ansteuert, um diese wieder in Betrieb zu setzen.

In einer Ausbildung der Erfindung kann es einstellbar sein, eine Wiederholung des Einmeßvorganges bei späteren Betriebsunterbrechungen der Spinnstelle nach einer vorbestimmten Anzahl von Betriebsunterbrechungen oder nach Ablauf eines vorbestimmten Zeitraumes erfolgen zu lassen. Ein Abdriften von Meßwerten wird mit der Erfindung vermieden.

Eine Bereitstellungseinrichtung, die an der Meßvorrichtung der Spinnstelle angeordnet ist, ermöglicht einen schnellen und zeitsparenden Einsatz.

Die Ausbildung der Vorrichtung mit einer verfahrbaren Bedienungseinrichtung für die Spinnstellen, die eine Bereitstellungseinrichtung für Kaliber aufweist, erfordert nur geringen baulichen Aufwand, da die Bereitstellungseinrichtung nur einmal an der Bedienungseinrichtung und nicht an jeder einzelnen Spinnstelle vorhanden sein muß.

Ein Kaliber mit glatter Oberfläche und in Stabform entsprechend der Fadenausbildung läßt sich einfach und kostengünstig herstellen und deckt das Anforderungsspektrum an das Kaliber weitgehend ab.

Vorteilhaft besteht das Kaliber aus Aluminiumoxid. Aluminiumoxid ist korrosionsbeständig und widerstandsfähig gegen Verschleiß, weist äußerst geringe Temperaturabhängigkeit auf und besitzt annähernd das gleiche Reflexionsverhalten sowie annähernd die gleiche natürliche Farbe wie Baumwolle.

Alternativ kann das Kaliber aus einem Drahtabschnitt oder aus einem Monofil bestehen.

Als Garnparameter können zum Beispiel Durchmesser, Querschnitte oder die Oberflächenbeschaffenheit detektiert werden. Oberflächenparameter sind zum Beispiel Oberflächenrauhigkeit, Oberflächenform, Farbe, Haarigkeit oder Drehung. Der Aufgabenstellung entsprechende Kaliber oder eine bestimmte Auswahl von Kalibern können in einem Magazin in den Zugriffsbereich der Einspannvorrichtung positionierbar bereitgehalten werden. Damit lassen sich in Verbindung mit einer Steuerungseinrichtung die Möglichkeiten zur Automatisierung des Einmeßvorganges erweitern.

Optische Verfahren zur Bestimmung von Garnparametern können mit dem erfindungsgemäßen Verfahren beziehungsweise der Vorrichtung vergleichend bewertet werden. Im Rahmen der Erfindung können sowohl optische Verfahren, die die Abschattung detektieren als auch optische Verfahren, die reflektiertes Licht detektieren, eingesetzt werden.

Alternativ kann der Einmeßvorgang bereits vor dem Einbau der Sensoreinheit in die Spinnstelle, zum Beispiel schon beim Herstellvorgang des Meßkopfes, erfolgen.

Die Erfindung erlaubt die Messung von momentanen Absolutwerten bei Garnparametern auch mit einfachen Meßeinrichtungen beziehungsweise einfachen Meßköpfen. Beim Austausch eines Meßkopfes lassen sich unerwünschte Meßfehler oder Meßungenauigkeiten vermeiden.

Weitere Einzelheiten der Erfindung werden anhand der Darstellung der Figuren erläutert.

Es zeigt:
- Fig. 1: eine schematisch dargestellte Spinnmaschine mit einer erfindungsgemäßen Vorrichtung zur Durchführung von Einmeßvorgängen in Teilansicht,
- Fig. 2: die schematische Darstellung einer Meßvorrichtung mit dem Kaliber in Fadenlaufposition,
- Fig. 3: die Meßvorrichtung der Fig. 2, jedoch mit dem Kaliber in Ruhestellung und einem im Meßbereich der Sensoreinrichtung laufenden Faden.

Die vereinfachte, teilweise Darstellung einer Rotorspinnmaschine 1 mit einer Vielzahl von Spinnstellen zeigt eine Spinnstelle 2 mit ihren wichtigsten Merkmalen. Das aus einer unterhalb der Spinnbox 3 stehenden Kanne 4 über einen Verdichter 5 in die Spinnbox 3 eingezogene Faserband 6 wird in der Spinnbox 3 in bekannter Weise zu Open-end-Garn gesponnen. Aus dem Abzugsröhrchen 7 wird mittels eines Abzugswalzenpaares 8 der gesponnene Faden 9 abgezogen. Die Garnqualität wird in einem sogenannten Reiniger 10 geprüft. Bei unzulässigen Dick- oder Dünnstellen sowie bei Moiré-Effekten wird das Garn mit einer in dem Reiniger 10 integrierten Schneideinrichtung geschnitten und der fehlerbehaftete Garnabschnitt entfernt.

Zur Erkennung derartiger Garnfehler wird zum Beispiel der Parameter "Garndurchmesser" laufend gemessen. Es kann aber auch das Auftreten von anderen unerwünschten Eigenschaften, wie Farbabweichungen, Auftreten von Fremdfasern oder Haarigkeit, überwacht werden. Nach Durchlaufen des Reinigers 10 wird der Faden 9 mittels eines Fadenführers 11 in Kreuzlagen auf eine Kreuzspule 12 abgelegt. Diese liegt mit ihrer Umfangsfläche auf einer Wickelwalze 13 auf, die sich in Pfeilrichtung 14 dreht und die Kreuzspule 12 in Pfeilrichtung 15 antreibt. Die Kreuzspule 12 wird von einem schwenkbar am Maschinenrahmen 16 angeordneten Spulenrahmen 17 getragen.

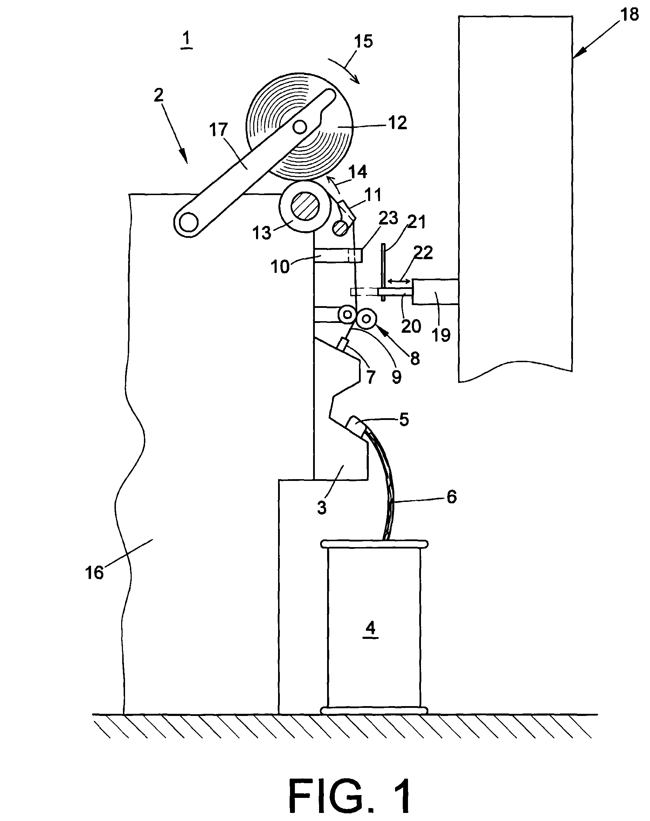

Die Figur 1 zeigt einen Anspinnwagen 18, der als Bedienungseinrichtung wirkt, in einer Position vor der Spinnstelle 2. Der Anspinnwagen 18 ist zum Beispiel mit zur Vereinfachung nicht dargestellten Reinigungseinrichtungen für die Spinnstellen ausgestattet und kann in dieser Position an der Spinnstelle 2 Servicearbeiten vornehmen, wie beispielsweise das Beheben eines Fadenbruchs und das Wiederanspinnen.

Der Anspinnwagen 18 weist eine Bereitstellungseinrichtung 19 auf, die mit einer mechanischen Einspannvorrichtung 20 ausgestattet ist. Das Kaliber 21 ist in der Einspannvorrichtung 20 aufgenommen und in Pfeilrichtung 22 verschiebbar. Vor dem Anspinnen, wenn sich kein Faden 9 im Meßbereich des Meßkopfes 23 befindet, wird die Einspannvorrichtung 20 in die gestrichelt dargestellte Position bewegt. Das Kaliber 21 befindet sich nun im Meßbereich des Meßkopfes 23, und der Einmeßvorgang kann durchgeführt werden. Nach erfolgtem Einmeßvorgang wird die Einspannvorrichtung 20 wieder zurückbewegt, und der Anspinnwagen 18 kann nach Inbetriebnahme der Spinnstelle 2 die nächste Spinnstelle anfahren.

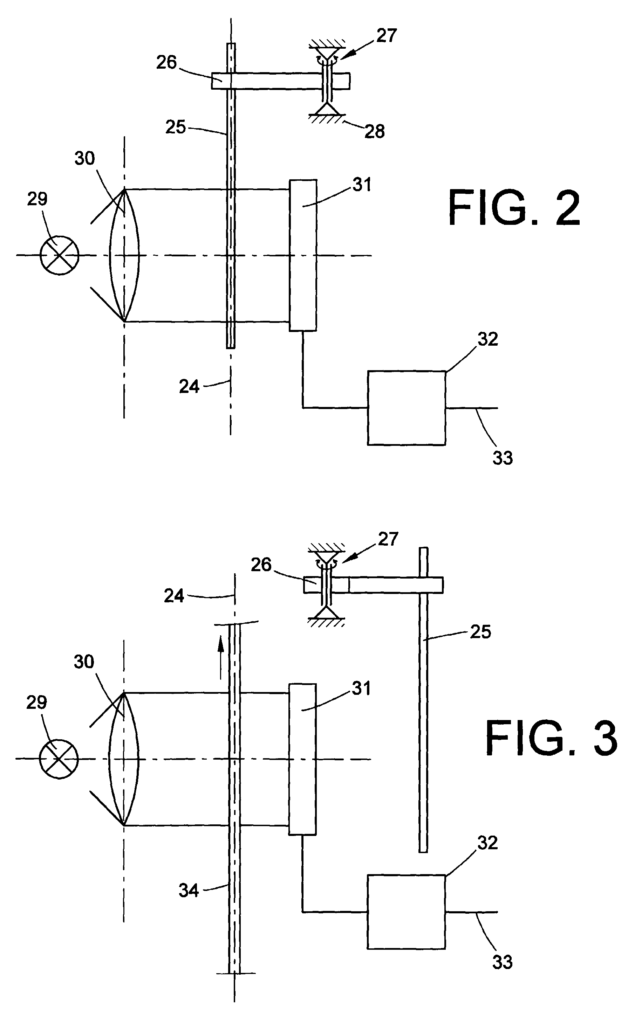

Das in der Figur 2 in Fadenlaufposition 24 angeordnete Kaliber 25 ist über eine Einspannvorrichtung 26 und die Bereitstellungseinrichtung 27 schwenkbar mit dem Maschinenrahmen 28 verbunden.

Ein Teil des von der Lichtquelle 29 erzeugten Lichtes wird mittels einer optischen Einrichtung 30 als Strahlenbündel auf die Sensoreinrichtung 31 gerichtet. Das im Strahlengang angeordnete Kaliber 25 bewirkt eine Abschattung, die von der Sensoreinrichtung 31 detektiert wird. Das Meßergebnis wird in einer als Rechner ausgebildeten Auswerteeinheit 32 ausgewertet. Die Auswerteeinheit 32 dient gleichzeitig zur Datenspeicherung und ist über die Leitung 33 mit weiteren zur Vereinfachung ebenfalls nicht dargestellten Auswerte- und Steuereinrichtungen verbunden.

Wird zum Beispiel beim Einmeßvorgang der Durchmesser gemessen, kann mit weiteren Kalibern unterschiedlicher Durchmesser eine Einmeßkurve erstellt werden, die in der Auswerteeinheit 32 hinterlegt wird. Für die jeweilige neue Messung wird die Einspannvorrichtung 26 in die in Fig. 3 dargestellte Position geschwenkt, das Kaliber 25 freigegeben und der Einspannvorrichtung 26 entnommen und anschließend ein anderes Kaliber mit einem anderen Durchmesser von der Einspannvorrichtung 26 aufgenommen. Mit der Einspannvorrichtung 26 wird dann das neue Kaliber in die Fadenlaufposition 24 geschwenkt und der Einmeßvorgang kann fortgesetzt werden. Nach Abschluß des Einmeßvorgangs verbleibt die Einspannvorrichtung 26 in der in Fig. 3 dargestellten Position. Nach dem Anspinnen durchläuft der Faden 34 den Meßbereich zwischen Lichtquelle 29 und Sensoreinrichtung 31. Die am laufenden Faden 34 detektierten Meßwerte werden mit den Meßwerten aus dem Einmeßvorgang verglichen und der absolute Durchmesser des Fadens 34 kann ermittelt werden.

Zur Bestimmung anderer Parameter wie der Beschaffenheit der Oberfläche, zum Beispiel der Farbe oder der Rauhigkeit, werden Einmeßvorgänge mit entsprechend der Aufgabenstellung ausgewählten Kalibern, zum Beispiel mit farbigen, glatten oder rauhen Oberflächen, durchgeführt.

In einer weiteren nicht dargestellten Ausbildung der Erfindung werden in einem Magazin entsprechende Kaliber oder eine bestimmte Auswahl von Kalibern bereitgehalten. Das Entnehmen des Kalibers 21,25 aus der Einspannvorrichtung 20, 26 und das Ablegen im Magazin, die Auswahl und das Bereitstellen eines neuen Kalibers 21,25 im Zugriffsbereich der Einspannvorrichtung 20, 26, das Aufnehmen mittels der Einspannvorrichtung 20, 26, das Schwenken des Kalibers 21,25 in die Meßposition, der Einmeßvorgang selbst und das Zurückschwenken aus der Meßposition werden durch eine Steuerungsvorrichtung automatisch durchgeführt.

## Patentansprüche

1. Verfahren zur Bestimmung wenigstens eines Parameters eines fadenförmigen Körpers, wie Durchmeser, Querschnitt oder Oberflächenbeschaffenheit mittels einer optischen Meßvorrichtung, wobei der fadenförmige Körper mindestens einen Meßbereich einer Sensoreinrichtung (23, 31) durchläuft,
dadurch gekennzeichnet,
daß an der Sensoreinrichtung (23, 31) ein Einmeßvorgang mittels eines gegen Umgebungseinflüsse unempfindlichen Kalibers (21, 25) mit bekannten Absolutwerten von Parametern durchgeführt wird, die Meßwerte gespeichert und dann mit am laufenden Faden (9, 34) detektierten Meßwerten verglichen werden.

2. Verfahren nach Anspruch 1, dadurch gekennzeichnet, daß das Kaliber (21, 25) von einer mechanischen Einspannvorrichtung (20, 26) aufgenommen und für den Einmeßvorgang in die Fadenlaufposition (24) im Meßbereich der Sensoreinrichtung (23, 31) gebracht wird.

3. Verfahren nach Anspruch 1 oder 2, dadurch gekennzeichnet, daß als Sensoreinrichtung (23,31) ein Meßkopf (23) dient.

4. Verfahren nach einem der vorhergehenden Ansprüche, dadurch gekennzeichnet, daß eine Bedienungseinrichtung (18) eine Spinnstelle (2) anfährt, das beim Einmeßvorgang jeweils eingesetzte Kaliber (21, 25) von der Bedienungseinrichtung (18) in den Meßbereich der Sensoreinrichtung (23, 31) der Spinnstelle (2) gebracht wird und anschließend der Einmeßvorgang während der Anwesenheit der Bedienungseinrichtung (18) an der Spinnstelle (2) erfolgt.

5. Vorrichtung zur Durchführung des Verfahrens nach Anspruch 1, dadurch gekennzeichnet, daß eine Bereitstellungseinrichtung (19, 27) eine Einspannvorrichtung (20, 26) zur Aufnahme mindestens eines Kalibers (21, 25) aufweist, mit der das Kaliber (21, 25) im Meßbereich der Sensoreinrichtung (23, 31) positionierbar ist.

6. Vorrichtung nach Anspruch 5, dadurch gekennzeichnet, daß die Bereitstellungseinrichtung (19, 27) an der Meßvorrichtung der Spinnstelle (2) angeordnet ist.

7. Vorrichtung nach Anspruch 6, dadurch gekennzeichnet, daß die Bereitstellungseinrichtung (19, 27) an einer verfahrbaren Bedienungseinrichtung (18) angeordnet ist.

8. Vorrichtung nach Anspruch 7, dadurch gekennzeichnet, daß die Bedienungseinrichtung (18) als Anspinnwagen ausgebildet ist.

9. Vorrichtung nach einem der Ansprüche 5 bis 8, dadurch gekennzeichnet, daß das Kaliber (21, 25) eine Stabform entsprechend der Fadenausbildung aufweist.

10. Vorrichtung nach einem der Ansprüche 5 bis 9, dadurch gekennzeichnet, daß das Kaliber (21, 25) aus Aluminiumoxid besteht.

11. Vorrichtung nach einem der Ansprüche 5 bis 10, dadurch gekennzeichnet, daß die Oberfläche des Kalibers (21, 25) glatt ist.
